(19) Europäisches Patentamt
European Patent Office
Office européen des brevets

(11) **EP 1 797 575 B1**

(12) **FASCICULE DE BREVET EUROPEEN**

(45) Date de publication et mention
de la délivrance du brevet:
**16.07.2014 Bulletin 2014/29**

(21) Numéro de dépôt: **05802895.2**

(22) Date de dépôt: **30.09.2005**

(51) Int Cl.:
***H01G 5/013*** *(2006.01)* ***G01L 9/12*** *(2006.01)*

(86) Numéro de dépôt international:
**PCT/FR2005/050798**

(87) Numéro de publication internationale:
**WO 2006/054006 (26.05.2006 Gazette 2006/21)**

(54) **CAPACITE VARIABLE A FLUIDE DIELECTRIQUE**

VARIABLE KAPAZITÄT MIT DIELEKTRISCHER FLÜSSIGKEIT

VARIABLE CAPACITANCE WITH DIELECTRIC FLUID

(84) Etats contractants désignés:
**DE GB IT**

(30) Priorité: **04.10.2004 FR 0452251**

(43) Date de publication de la demande:
**20.06.2007 Bulletin 2007/25**

(73) Titulaire: **Commissariat à l'Énergie Atomique
et aux Énergies Alternatives
75015 Paris (FR)**

(72) Inventeur: **CASSET, Fabrice
F-38570 TENCIN (FR)**

(74) Mandataire: **Ahner, Philippe et al
BREVALEX
95, rue d'Amsterdam
75378 Paris Cedex 8 (FR)**

(56) Documents cités:
**DE-B- 1 105 519      FR-A- 2 619 914
GB-A- 1 064 889      US-A- 4 380 932
US-A- 6 122 972**

## Description

## DOMAINE TECHNIQUE

L'invention se rapporte au domaine des dispositifs électroniques de type condensateurs présentant une capacité variable, et plus particulièrement aux microsystèmes électromécaniques dont la capacité est modulée par la variation du volume d'un fluide diélectrique entre deux électrodes.

## ÉTAT DE LA TECHNIQUE ANTÉRIEURE

Le développement d'appareils portables de plus en plus petits et performants incite à rechercher des nouveaux composants pour réaliser de nouvelles fonctionnalités. Ainsi, dans les applications radiofréquence (RF) telles que la téléphonie mobile, les ordinateurs portables, ou tout autre objet communicant,... les microsystèmes électromécaniques (ou MEMS) sont des alternatives crédibles aux composants microélectroniques « classiques » en raison de leur intégration et de leurs performances théoriques.

Dans ce contexte, des dispositifs MEMS dont la capacité (électrique) est variable mais présentant une faible tension d'actionnement et une grande plage de variation de capacité sont recherchés. Le domaine de la RF impose de plus une dissociation entre la zone d'actionnement et la zone « active » servant à la variation de capacité, afin d'éviter que le signal RF ne perturbe la variation de capacité.

De façon classique, lorsque deux électrodes ont une surface S en regard et sont séparées d'une distance d par un milieu de permittivité $\varepsilon$, la capacité C entre les deux électrodes est définie par l'expression suivante :

$$C = \frac{\varepsilon S}{d}.$$

Pour faire varier la capacité, trois paramètres peuvent ainsi être modifiés : on peut d'abord faire varier la distance entre les électrodes. L'exemple le plus répandu pour une telle « capacité variable à variation d'entrefer » peut être modélisé par une électrode fixe (sur un substrat) et une électrode mobile, actionnée de façon électrostatique par exemple. De nombreux modes de réalisation sont disponibles dans la littérature, comme par exemple la structure de Young et Boser (« A micromachined variable capacitor for monolithic low noise VCOs », Solid State Sensor and Actuator Workshop 1996 : 86-89).

Cependant, la valeur de la capacité est définie par l'entrefer entre les deux électrodes : une électrode étant suspendue, la stabilité de la valeur de la capacité n'est pas assurée. De plus, les capacités variables à variation d'entrefer par actionnement électrostatique présentent un problème majeur : au tiers de l'entrefer initial, les forces électrostatiques deviennent prépondérantes par rapport aux forces de rappel, et il y a un brusque collage des électrodes (phénomène de « pull-in »), ce qui limite fortement la plage de variation de capacité.

La capacité étant inversement proportionnelle à la hauteur de l'entrefer, cette dernière ne peut être augmentée pour augmenter la plage de variation de capacité, sous peine d'avoir des valeurs de capacité extrêmement faibles. Différentes solutions ont été envisagées pour pallier ce problème, mais les résultats sont complexes d'un point de vue technologique, et ne résolvent pas le problème de non stabilité de la capacité.

D'autres actionnements ont également été envisagés. Cependant, l'actionnement thermique présente le défaut majeur d'une forte consommation. Quant à l'actionnement piézoélectrique, il est encore peu utilisé en production.

Une autre possibilité est la variation de la surface en regard des électrodes. Pour ces « capacités variables à variation de surface », l'exemple le plus courant est celui relaté dans le document de Yao JJ et coll. (« High tuning ratio MEMS based tunable capacitors for RF communication applications », Solid State Sensor and Actuator Workshop 1998 : 124-127). La structure est constituée de deux lignes de peignes imbriqués, l'une fixe et l'autre mobile. L'application d'une force électrostatique provoque le déplacement latéral du peigne mobile, mouvement qui a pour effet de faire varier les surfaces en regard, et donc la capacité.

Ce type de structure présente différents problèmes, et notamment des tensions d'actionnement élevées, un encombrement important et une valeur de capacité peu stable.

Enfin, il est possible de faire varier la permittivité du milieu présent entre les électrodes. Pour ces « capacités variables avec variation du diélectrique », il devient nécessaire de modifier la composition de l'entrefer, habituellement composé d'air ou de vide, de permittivité constante. Ainsi certains auteurs ont-ils utilisé une membrane mobile de diélectrique en série avec l'air (Yoon J-B et Nguyen CT : « A high-Q tunable micromechanical capacitor with movable dielectric for RF application », IEDM 2000 : 489-492). Cette géométrie est technologiquement très complexe à réaliser, et nécessite une membrane de diélectrique parfaitement plane avec un mouvement contrôlé.

US 6 122 972 divulgue un capteur de pression capacitif.

## EXPOSÉ DE L'INVENTION

La présente invention se propose de pallier les problèmes inhérents aux systèmes existants, et concerne une capacité variable utilisant un autre principe de fonctionnement.

Par ailleurs, l'invention se propose de préconiser les solutions éprouvées dans l'état de la technique quant à l'actionnement. L'invention concerne ainsi un dispositif de type condensateur à capacité variable dont la zone d'actionnement est dissociée de la zone de variation de capacité ; l'actionnement du dispositif selon l'invention est de préférence électrostatique.

Selon l'invention, un fluide diélectrique placé dans une cavité du dispositif est disposé entre deux électrodes de condensateur ; la quantité de fluide diélectrique entre les électrodes de condensateur, et plus particulièrement dans la cavité, peut être modulée par des moyens aptes à déplacer le fluide, de façon à faire varier la capacité entre les deux électrodes.

De façon avantageuse, la variation de la quantité de fluide diélectrique se fait par le principe des vases communicants, grâce à la présence d'une deuxième cavité communiquant avec la première par l'intermédiaire d'un passage fluidique. Selon un mode de réalisation, les deux cavités sont de niveau avec le passage fluidique, et de même hauteur. Selon la variation de capacité désirée, la cavité d'actionnement peut être de volume supérieur à la cavité correspondant aux électrodes de condensateur ; il peut être possible également de tirer parti d'une différence de niveau entre les deux cavités.

Le déplacement du fluide est réalisé par l'intermédiaire d'une membrane présente dans la deuxième cavité, dont la déflexion pousse le fluide diélectrique vers la première cavité, et donc augmente la capacité définie par les deux électrodes de condensateur.

Sous un mode de réalisation préférée, la variation de la quantité de fluide est effectuée de manière électrostatique grâce à des électrodes d'actionnement dans la deuxième cavité. Les électrodes utilisées pour l'actionnement du fluide sont alors indépendantes des électrodes de condensateur. Selon les modes de réalisation et la plage de variation, les électrodes d'actionnement composent le fond et le sommet de la cavité ou le sommet et une paroi en forme de cuvette.

L'invention concerne également un procédé de fabrication d'un tel condensateur à capacité variable. En particulier, le procédé utilise des techniques de microélectronique, avec la formation des cavités et du passage fluidique sur un substrat, par exemple en silicium, et le remplissage partiel de l'espace ainsi créé par un fluide diélectrique.

Le procédé selon l'invention prévoit la formation d'électrodes par dépôt et gravure, par l'intermédiaire du dépôt de couches sacrificielles.

**BRÈVE DESCRIPTION DES DESSINS**

Les figures annexées permettront de mieux comprendre l'invention, mais ne sont données qu'à titre indicatif et ne sont nullement restrictives.
La figure 1 représente schématiquement un mode de réalisation d'un condensateur selon l'invention.
La figure 2 montre un mode de réalisation préféré d'un condensateur selon l'invention.
Les figures 3a-3c représentent des modes de réalisation alternatifs d'un condensateur selon l'invention.

tion.
Les figures 4 montrent un diagramme de réalisation d'un condensateur selon l'invention.

**EXPOSÉ DÉTAILLÉ DE MODES DE RÉALISATION PARTICULIERS**

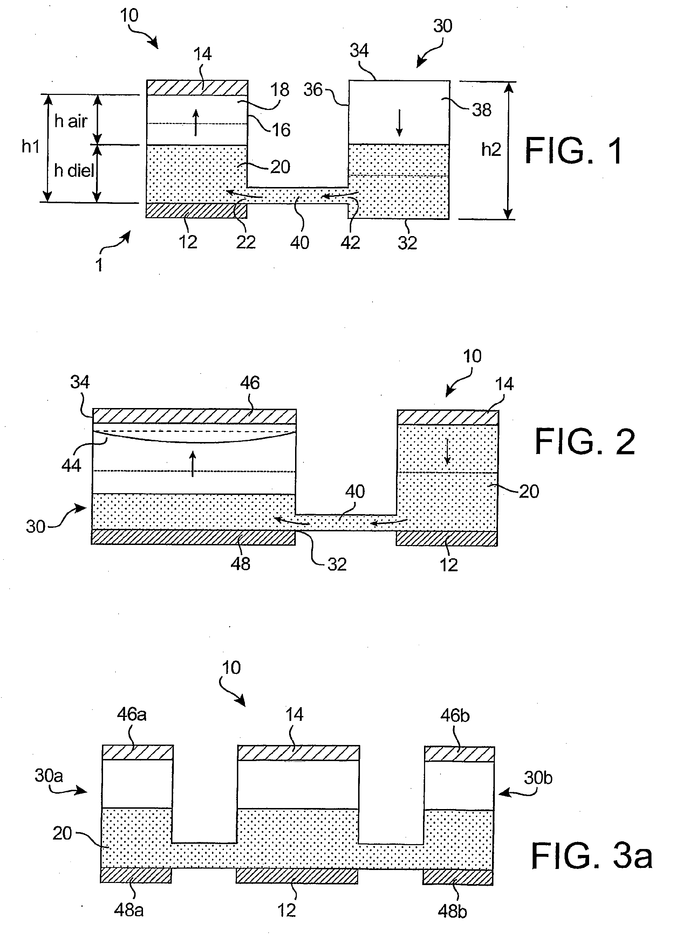

Dans un condensateur 1 selon l'invention, schématisé en figure 1, une première cavité 10 concerne la fonction de condensateur proprement dite du dispositif, avec deux électrodes de condensateur 12, 14. La première cavité 10 présente une paroi de base, une paroi sommet, et des parois latérales 16. Selon le mode de réalisation préféré représenté, les deux électrodes de condensateur 12, 14 forment les parois de base et sommet respectivement ; cependant, elles peuvent également ne pas délimiter la cavité 10, par exemple être séparées de l'espace de la cavité 10 par interposition d'une couche de diélectrique solide (non représenté), ou être plus petites que les parois de base et sommet proprement dites.

Les deux électrodes de condensateur 12, 14 sont séparées d'une première hauteur, ou entrefer, h1. Le milieu de l'entrefer est mixte : il comprend une couche d'air, ou de gaz neutre (argon, azote, par exemple), 18 au-dessus d'une couche d'un fluide diélectrique 20. La capacité $C_{eq}$ de la cavité 10 est équivalente aux deux capacités dues à l'air 18 et au diélectrique 20 en série, et s'exprime sous la forme :

$$(1) \quad \frac{1}{C_{eq}} = \frac{1}{C_{air}} + \frac{1}{C_{diel}}$$

$$(2) \quad C_{eq} = \frac{\varepsilon_{air}\ \varepsilon_{diel}\ S}{h_{diel} + \varepsilon_{diel}\ h_{air}}$$

avec $C_{eq}$, $C_{diel}$, $C_{air}$ respectivement capacités des couches d'entrefer, de fluide diélectrique 20 et d'air 18 ; $h_{diel}$ et $h_{air}$ respectivement hauteurs du fluide diélectrique 20 et de l'air 18 ($h_{diel} + h_{air} = h1$) ; S surface en regard des électrodes 12, 14.

On constate par cette relation (2) que la présence de la « couche diélectrique » (ou d'un fluide diélectrique) augmente la valeur de la capacité équivalente si l'épaisseur de diélectrique $h_{diel}$ n'est pas négligeable par rapport à l'épaisseur d'air $h_{air}$.

Avantageusement, le fluide diélectrique 20 présent dans le dispositif selon l'invention a une permittivité très supérieure à celle de l'air (ou du gaz neutre), par exemple de 100 à 500, de façon à optimiser les valeurs possibles de $C_{eq}$. Le fluide utilisé pourra être disponible dans le commerce, par exemple le DALIA AX™, le NOVEC HFE 7500™ ou encore la série de fluides BP Dielectric™, ou tout autre équivalent.

L'équation (2) montre également que la position de l'interface entre air 18 et fluide diélectrique 20 permet de modifier la valeur de la capacité résultante $C_{eq}$. Le condensateur selon l'invention est donc muni de moyens pour faire varier la quantité de fluide diélectrique 20 entre les électrodes 12, 14, et en conséquence obtenir la variation de capacité désirée.

En particulier, un orifice 22 est présent sur l'une des parois 16 de la cavité 10 de façon à permettre de moduler le volume de fluide diélectrique 20 présent au sein de la cavité 10, c'est-à-dire son épaisseur $h_{diel}$, et donc la valeur de la capacité $C_{eq}$. L'orifice 22 est couplé à des moyens permettant de déplacer le fluide diélectrique 20 en direction et hors de la cavité 10 afin d'obtenir un condensateur à capacité variable. Ces moyens peuvent être quelconques, comme une pompe.

Selon un mode de réalisation préféré, le principe des vases communicants est utilisé par les moyens pour déplacer le fluide diélectrique 20.

Ainsi, une deuxième cavité 30, délimitée par une partie de base 32, une partie sommet 34 et des parois latérales 36 contient du fluide diélectrique 20 et de l'air ou du gaz neutre 38. La deuxième cavité 30 est mise en communication avec la première cavité 10 par l'intermédiaire d'un passage fluidique 40 grâce à un deuxième orifice 42 dans une paroi, latérale 36 dans ce mode de réalisation.

Le fluide diélectrique 20, plus dense que l'air, est libre de circuler par le passage fluidique 22, 40, 42. Le volume du fluide diélectrique 20 dans le dispositif 1 est inférieur au volume des deux cavités 10, 30 afin de permettre cette circulation.

Initialement, par le principe des vases communicants, il y a le même niveau de fluide dans les deux cavités 10, 30. Avantageusement, la partie de base 32 de la deuxième cavité 30 se situe sur un même plan que l'électrode de base 12 de la première cavité 10 ; de même, les deux orifices 22, 42 sont en regard et adjacents au plan de base afin de faciliter les modélisations de quantités de fluide 20 dans chaque cavité 10, 30. La deuxième hauteur h2 de la deuxième cavité 30 est de préférence identique à la hauteur h1 séparant les deux électrodes 12, 14 de condensateur.

Si une surpression (flèche sur la figure) est appliquée sur le fluide diélectrique 20 dans la deuxième cavité 30, le fluide 20 est forcé vers la première cavité 10 par le passage 40, afin d'atteindre la même pression d'air sur le fluide diélectrique 20 dans les deux cavités 10, 30 : le volume de fluide diélectrique 20 augmente dans la première cavité 10, c'est-à-dire que la quantité de fluide diélectrique 20, séparant les deux électrodes 12, 14 augmente, c'est-à-dire la hauteur $h_{diel}$, et la capacité résultante $C_{eq}$ augmente. Inversement, si la surpression diminue, la capacité $C_{eq}$ de la première cavité 10 diminue.

Avantageusement, la surpression dans la deuxième cavité 30 est effectuée par compression du volume d'air 38 par déflexion d'une membrane 44, tel que schématisé dans la figure 2. Avantageusement, au repos, la membrane 44 est adjacente à la partie sommet 34 de la deuxième cavité 30 ; à cet égard, il est à noter l'espace entre les deux éléments montré sur la figure 2 n'est qu'illustratif afin de mieux visualiser le fonctionnement du dispositif.

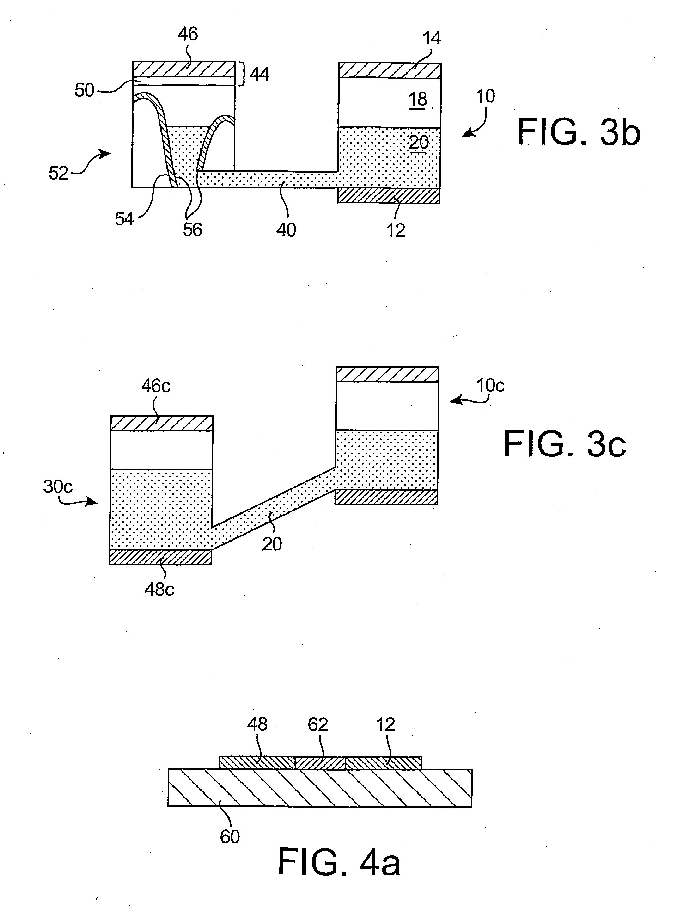

De façon préférée, la membrane 44 est activée de façon électrostatique, c'est-à-dire déformable sous l'action d'une tension de commande entre deux électrodes 46, 48 ; ce type de membrane comprend habituellement une électrode collée à une couche structurelle, ou un ensemble de couches structurelles. La membrane flexible et étanche 44 peut ainsi composer la partie sommet 34, qui comprend ainsi une couche métallique 46 d'électrode et une couche ayant de bonnes propriétés mécaniques 50 (voir figure 3b), avantageusement elle aussi métallique. Certes, une monocouche de Au, Cr ou Ni pourrait accomplir les deux fonctions (d'électrode et de membrane), mais il est avantageux d'avoir deux couches distinctes. Dans ce cas, de préférence, une couche intermédiaire d'accrochage, par exemple en Ti ou Cr, est localisée entre les deux couches distinctes. De plus, des couches supplémentaires peuvent être rajoutées pour modifier les contraintes en compression afin d'obtenir un dispositif plus souple (par exemple tricouche pour l'électrode : Ni en tension - Au - oxyde en compression). Avantageusement, la membrane 44 est protégée de l'environnement, par exemple par encapsulation du dispositif selon les techniques de « packaging » microélectronique connues.

L'actionnement est réalisé dans la cavité 30 par la création d'une différence de potentiel entre deux électrodes d'actionnement 46, 48 situées de part et d'autre de la membrane 44, entraînant la création d'une force électrostatique entre les deux électrodes, ce qui amène une déflexion de la membrane 44. Dans l'exemple de la figure 2, les deux électrodes d'actionnement 46, 48 sont localisées dans les parties de base 32 et sommet 34 de la deuxième cavité 30, l'une des électrodes 46 fait partie de la membrane 44. Avantageusement, une couche structurelle 50, par exemple en nitrure, revêt l'électrode 46. La différence de potentiel entre les deux électrodes 46, 48 fait défléchir la membrane 44, ou l'ensemble électrode 46 - couche structurelle 50, de la partie sommet 34.

La déflexion de la membrane 44 pousse le fluide diélectrique de la cavité 30 vers la cavité 10 ce qui fait varier la capacité $C_{eq}$ de cette dernière. Or la position de la membrane 44 en fonction de la tension d'actionnement appliquée entre les électrodes 46, 48 est reproductible et suit une loi déterminable. En particulier, comme il n'existe, dans le cas préféré, pas de contact électrode-diélectrique-électrode, les charges migrant à travers la couche de matériau diélectrique qui sépare les deux électrodes 46, 48 ne parasitent pas le fonctionnement du composant 30 : il n'y a pas de problèmes de charges. Il existe ainsi une relation donnant la variation de la capacité $C_{eq}$ en fonction de la tension appliquée, aux électrodes d'actionnement 46, 48.

Avantageusement, pour une tension maximale entraînant une certaine déflexion de la membrane 44 représentée en trait plein sur la figure 2, la première cavité 10 est entièrement remplie de fluide diélectrique 20 ; la valeur de capacité $C_{eq}$ est alors maximale. Au retour à une tension nulle (membrane au repos, en tirets sur la figure 2), la valeur de capacité $C_{eq}$ revient à sa valeur minimale au repos, donnée par la valeur déterminée par la position de l'interface du liquide diélectrique avec l'air « de niveau » entre les deux cavités 10, 30 (en pointillés sur la figure 2, et représentée en figure 1).

Les cavités 10, 30 peuvent être de tailles identiques ou différentes, comme de formes identiques ou différentes (cubiques, cylindriques,...). En particulier, leur surface peut différer selon les valeurs de capacité et la variation de capacité désirée. Pour avoir une valeur élevée de capacité $C_{eq}$ avec une forte variation, il est préférable que la deuxième cavité 30 présente une surface plus importante que la cavité 10. Ainsi, il y a plus de fluide 20 disponible pour une plus grande variation de niveau du fluide dans la cavité 10.

Selon un mode de réalisation, la deuxième cavité 30 présente une surface de 600 $\mu$m x 600 $\mu$m pour une hauteur h2 de 5 $\mu$m à 20 $\mu$m. La cavité 10 présente alors la même hauteur h1 de 5 $\mu$m à 20 $\mu$m, pour une surface S de 400 $\mu$m x 400 $\mu$m à 600 $\mu$m x 600 $\mu$m.

Il peut être intéressant d'avoir par ailleurs plusieurs cavités 30a, 30b d'actionnement pour une première cavité 10 afin de disposer d'un volume de fluide 20 plus important, et ainsi obtenir une variation de capacité supérieure : voir figure 3a. Dans ce mode de réalisation, il est possible d'actionner par exemple seulement une des deux paires d'électrodes 46a, 48a et de déplacer le fluide 20 vers les deux cavités 20, 30b. Il peut cependant être avantageux de procéder à une mise sous tension simultanée des deux paires 46a, 48a, 46b, 48b afin d'obtenir le remplissage uniquement de la cavité 10 relative à la variation de la capacité : la tension d'actionnement nécessaire à la variation de volume est alors inférieure, ce qui facilite la réalisation par exemple de composants de type embarqués.

Afin d'obtenir des tensions d'actionnement faibles, un entrefer d'actionnement localement plus petit peut également être utilisé : les forces électrostatiques plus importantes permettent d'obtenir une initiation de la déflexion de la membrane 44 pour des tensions faibles. Un mode alternatif de réalisation de l'invention schématisé dans la figure 3b présente ainsi une cavité d'actionnement 52 dont le profil des parois 54 est en cuvette. La deuxième électrode d'actionnement 56 est ici localisée sur les parois 54.

Grâce à l'invention, l'actionnement est dissocié de la variation de capacité ; en particulier dans le cas d'une application radiofréquence, la puissance RF associée aux électrodes 12, 14 de condensateur de capacité $C_{eq}$ ne perturbe pas la variation de cette dernière, qui est assurée par des électrodes 46, 48, 56 indépendantes. Par ailleurs, l'utilisation d'un fluide diélectrique 20 de forte permittivité $\varepsilon_{diel}$ permet d'atteindre des valeurs élevées de capacité $C_{eq}$, tout en gardant une grande plage de variation de capacité. Enfin, contrairement aux capacités à variation d'entrefer, il n'y a pas de problèmes de charges, et contrairement aux capacités à variation de surface, la tension d'actionnement reste faible.

Il est possible également de tirer parti de la différence de hauteur dans le principe des vases communicants afin d'augmenter la plage de variation de la capacité : tel que schématisé sur la figure 3c, si la partie d'actionnement 30c est sur un plan inférieur à la première cavité 10c, le fluide diélectrique est initialement principalement localisé dans la deuxième cavité 30c et la capacité initiale $C_{eq}$ de la première cavité est faible. Un actionnement des électrodes 46c, 48c de la deuxième cavité 30c permet de remplir la première cavité 10c ; la différence entre les deux capacités minimale et maximale du dispositif est accrue.

Selon un mode de réalisation préféré, le condensateur selon l'invention peut être fabriqué par des technologies classiques en microélectronique. En particulier, les techniques sur silicium peuvent être employées.

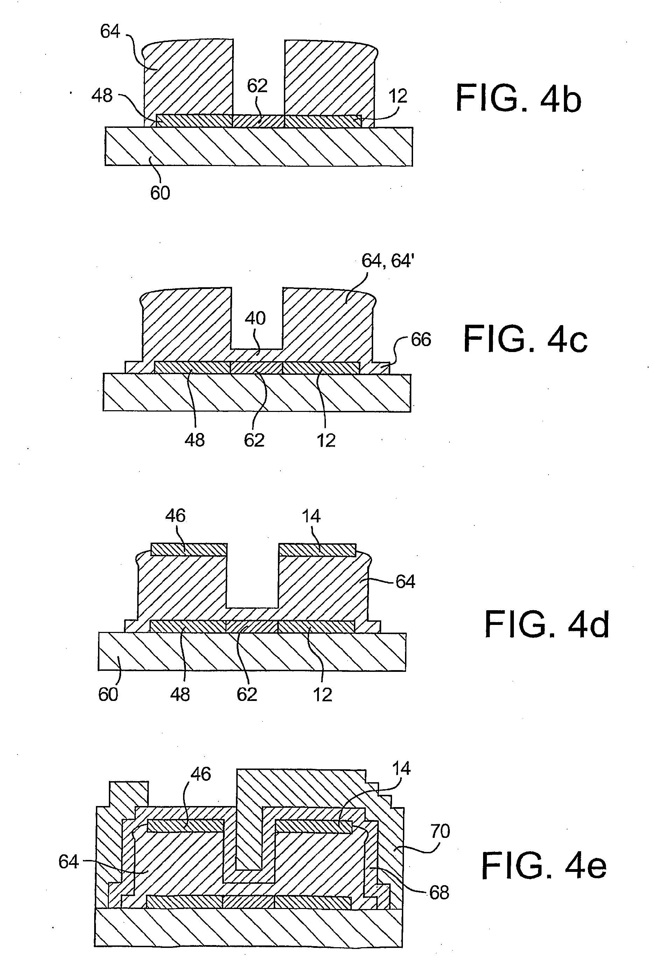

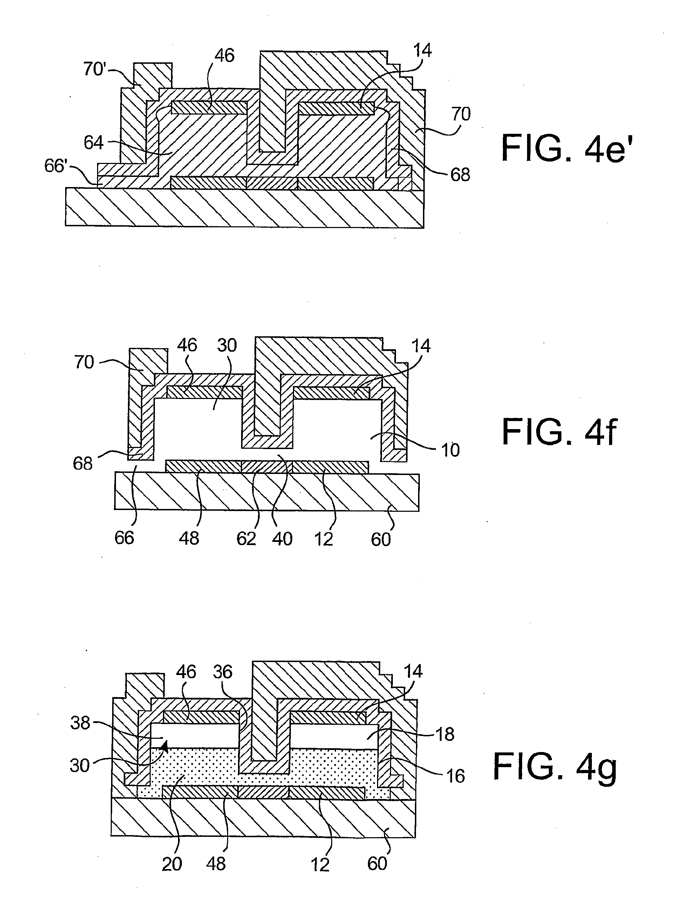

Par exemple et tel que schématisé sur les figures 4, on positionne sur un substrat en silicium 60 les électrodes de base, de condensateur (ou RF) 12 et d'actionnement 48, par exemple par dépôt et gravure de 300 nm Ti et 1 $\mu$m d'or ; puis on met à niveau le passage fluidique par dépôt et gravure dans l'espace entre les électrodes d'une couche 62, par exemple 1,3 $\mu$m de $Si_3N_4$ (figure 4a).

On dépose ensuite la résine sacrificielle, par exemple un polyimide ou un oxyde, qui délimite les espaces des cavités 10, 30, 40. De préférence, ce positionnement se fait en deux étapes : l'ensemble 60, 12, 48, 62 est recouvert d'une couche de résine 64, qui est ensuite gravée de façon à définir les deux cavités 10, 30 (figure 4b). Ensuite, une deuxième couche de résine sacrificielle, identique ou différente, 64' est déposée et gravée, de façon à définir le passage fluidique 40 ainsi que des tunnels latéraux 66 permettant de supprimer ultérieurement la résine sacrificielle et de remplir les cavités 10, 30, 40 (figure 4c).

Les électrodes supérieures d'actionnement 46 et RF 14 sont ensuite mises en place, par exemple par dépôt et gravure de 300 nm de Ti et 1 $\mu$m d'or (figure 4d).

La couche structurelle 68 délimitant les parois et la partie sommet peut ensuite être déposée et gravée, par exemple en laissant 1 $\mu$m de $Si_3N_4$. Avantageusement, une couche de consolidation 70, par exemple en $Si_3N_4$ ou en oxyde, d'épaisseur 5 $\mu$m est ensuite mise en place (figure 4e) pour consolider en particulier les flancs des cavités.

L'ensemble issu de l'étape précédente est gravé, en particulier latéralement, afin de pouvoir ouvrir les tunnels 66 et d'atteindre une forme externe globalement finale. Pour réaliser une gravure chimique plus aisée, il est possible de réaliser par exemple un tunnel 66' long (voir figure 4e'), et de ne pas toucher à la couche de consolidation 70'. La couche sacrificielle intérieure 64 est alors supprimée par tout moyen connu (figure 4f).

Le fluide diélectrique 20 est ensuite introduit, et les tunnels latéraux 66 sont fermés, par exemple par un dépôt/gravure d'oxyde, avec un masque dur sur la membrane 46 pour éviter d'altérer sa rigidité (figure 4g).

En ce qui concerne le remplissage des cavités par le fluide diélectrique 20, on peut par exemple déposer une « goutte » de fluide 20 devant le tunnel 66, le fluide migrant dans la cavité 10, 30, 40 par capillarité. Une autre possibilité est de tremper le dispositif de la figure 4f en entier dans la solution de fluide diélectrique 20 après avoir mis sous vide les cavités : ces dernières se remplissent, puis sont scellées. Un dispositif utilisant une seringue pour injecter du liquide peut être utilisé également.

Pour réaliser la structure avec cuvette de la figure 3b, il est possible de reprendre le procédé précédemment décrit dans les figures 4 en ajoutant une étape de dépôt d'un matériau « sacrificiel » ainsi qu'une étape de polissage mécano chimique (CMP). Référence est faite à la demande de brevet FR 03/50911. En particulier, la cavité en cuvette est formée en plusieurs étapes, avec dépôt d'un matériau « dur » destiné aux bords, remplissage par un matériau isolant moins dur, et CMP de l'ensemble : du fait de la différence de dureté, une cavité en sillon ou cuvette se forme. Ensuite, il est possible de procéder au dépôt de l'électrode 56 sur les parois comme précédemment décrit.

Ces modes de réalisation ne sont bien sûr donnés qu'à titre illustratif et des alternatives sont possibles. En particulier, les gravures chimiques peuvent être remplacées par des gravures plasma ou par un procédé vapeur haute fréquence ; le $Si_3N_4$ peut être remplacé, en totalité ou en combinaison, par SiN et/ou Si et/ou $SiO_2$, tout comme Cr/Au ou Al/Si doivent être compris comme alternatifs à Ti/Au.

## Revendications

**1.** Condensateur (1) à capacité ($C_{eq}$) variable comprenant :

- une première et une deuxième électrodes (12, 14) de condensateur,
- une première cavité (10) ayant un premier volume et contenant un fluide diélectrique (20) tel qu'une quantité du fluide diélectrique (20) est disposée entre les électrodes de condensateur (12, 14), et
- **caractérisé par** des moyens (30) pour faire varier la quantité de fluide diélectrique (20) entre les électrodes (12, 14) de condensateur comprenant au moins une deuxième cavité (30) ayant un deuxième volume et délimitée au moins par une partie de base (32) et une partie sommet (34), la deuxième cavité (30) étant reliée à la première cavité (10) par un passage fluidique (40), une membrane (44) flexible étanche apte à se déformer sous l'action d'une tension de commande, et une première et une deuxième électrodes (46, 48) d'actionnement susceptibles de modifier le volume de la deuxième cavité (30).

**2.** Condensateur selon la revendication 1 dans lequel le fluide diélectrique (20) a une constante diélectrique supérieure à celle de l'air.

**3.** Condensateur selon la revendication 2 dans lequel le fluide diélectrique (20) est une huile.

**4.** Condensateur selon l'une des revendications 1 à 3 dans lequel le volume de fluide diélectrique dans le condensateur (1) est inférieur à la somme des premiers et deuxième volumes.

**5.** Condensateur selon la revendication 4 dans lequel la première cavité (10) présente une partie de base et une partie sommet, et dans lequel les hauteurs séparant les parties de base et les parties sommet de chaque cavité (10, 30) sont égales.

**6.** Condensateur selon l'une des revendications 1 à 5 dans lequel la première cavité (10) présente une partie de base et les parties de base de chaque cavité (10, 30) sont situées sur un même plan de base, la première électrode (12) de condensateur étant parallèle au plan de base.

**7.** Condensateur selon la revendication 6 dans lequel le passage fluidique (40) est en communication avec les première et deuxième cavités (10, 30) par, respectivement, un premier et un deuxième orifices (22, 42) qui sont adjacents au plan de base.

**8.** Condensateur selon l'une des revendications 1 à 5 dans lequel la première cavité (10) présente une partie de base et les parties de base de chaque cavité (10, 30) ne sont pas situées sur un même plan.

**9.** Condensateur selon l'une des revendications 1 à 8 dans lequel la première électrode d'actionnement (46) est comprise dans la partie sommet (34) et la deuxième électrode d'actionnement (48) est comprise dans la partie de base (32) de la deuxième cavité (30).

**10.** Condensateur selon l'une des revendications 1 à 8 dans lequel la deuxième cavité (52) comprend des parois (54) en forme de cuvette entre la partie de base (32) et la partie sommet (34), la première électrode d'actionnement (46) est comprise dans la partie sommet (34) et la deuxième électrode d'actionnement (56) est comprise dans les parois (54) de la deuxième cavité (52).

11. Condensateur selon l'une des revendications 1 à 10 dans lequel le deuxième volume est supérieur au premier volume.

12. Procédé de fabrication d'un condensateur à capacité variable comprenant :

   - la fabrication d'au moins deux cavités (10, 30) reliées entre elles par un passage fluidique (40) sur un support (60), comprenant la mise en place de deux premières électrodes (12, 48) affectées chacune à une des deux cavités, et la mise en place d'une résine sacrificielle (64) pour former les cavités (10, 30) et le passage fluidique (40),
   - la mise en place d'une membrane sur la résine sacrificielle (64) formant une deuxième cavité (30),
   - la mise en place d'une électrode de condensateur (14) sur la résine sacrificielle de la première cavité (10) et d'une électrode d'actionnement (46) sur la membrane (44) de la deuxième cavité (30),
   - la mise en place dans les cavités d'un volume de fluide diélectrique (20) inférieur au volume des deux cavités (10, 30).

13. Procédé selon la revendication 12 dans lequel une paroi de chaque cavité (10, 30) et du canal fluidique (40) est parallèle au support (60).

14. Procédé selon la revendication 13 comprenant le dépôt d'une couche d'électrode sur le support (60), la gravure de la couche d'électrode pour former la paroi (12, 48) de chaque cavité parallèle au support (60).

15. Procédé selon la revendication 14 comprenant la mise en place d'une couche de niveau (62) entre les deux premières électrodes (12, 48).

**Patentansprüche**

1. Kondensator (1) mit variabler Kapazität ($C_{eq}$), umfassend:

   - eine erste und eine zweite Kondensatorelektrode (12, 14),
   - einen ersten Hohlraum (10) mit einem ersten Volumen, der ein dielektrisches Fluid (20) enthält, wobei eine Menge des dielektrischen Fluids (20) zwischen den Kondensatorelektroden (12, 14) angeordnet ist, und
   - **gekennzeichnet durch** Mittel (30), um die Menge an dielektrischem Fluid (20) zwischen den Kondensatorelektroden (12, 14) zu variieren, umfassend mindestens einen zweiten Hohlraum (30) mit einem zweiten Volumen, der zumindest **durch** einen Basisteil (32) und einen Kopfteil (34) begrenzt ist, wobei der zweite Hohlraum (30) mit dem ersten Hohlraum (10) **durch** einen Fluiddurchgang (40), eine dichte flexible Membran (44), die sich unter der Wirkung einer Steuerspannung verformen kann, und eine erste und eine zweite Betätigungselektrode (46, 48), die das Volumen des zweiten Hohlraums (30) verändern können, verbunden ist.

2. Kondensator nach Anspruch 1, bei dem das dielektrische Fluid (20) eine größere dielektrische Konstante als die Luft hat.

3. Kondensator nach Anspruch 2, bei dem das dielektrische Fluid (20) ein Öl ist.

4. Kondensator nach einem der Ansprüche 1 bis 3, bei dem das dielektrische Fluidvolumen in dem Kondensator (1) geringer als die Summe der ersten und zweiten Volumina ist.

5. Kondensator nach Anspruch 4, bei dem der erste Hohlraum (10) einen Basisteil und einen Kopfteil aufweist, und bei dem die Höhen zwischen den Basisteilen und den Kopfteilen jedes Hohlraums (10, 30) gleich sind.

6. Kondensator nach einem der Ansprüche 1 bis 5, bei dem der ersten Hohlraum (10) einen Basis aufweist, und die Basisteile jedes Hohlraum (10, 30) auf einer selben Basisebene angeordnet sind, wobei die erste Kondensatorelektrode (12) parallel zur Basisebene ist.

7. Kondensator nach Anspruch 6, bei dem der Fluiddurchgang (40) mit dem ersten und zweiten Hohlraum (10, 30) durch eine erste bzw. zweite Öffnung (22, 42), die an die Basisebene angrenzen, in Verbindung steht.

8. Kondensatornach einem der Ansprüche 1 bis 5, bei dem der erste Hohlraum (10) einen Basisteil aufweist, und die Basisteile jedes Hohlraums (10, 30) nicht auf einer selben Ebene angeordnet sind.

9. Kondensator nach einem der Ansprüche 1 bis 8, bei dem die erste Betätigungselektrode (46) in dem Kopfteil (34) enthalten ist, und die zweite Betätigungselektrode (48) in dem Basisteil (32) des zweiten Hohlraums (30) enthalten ist.

10. Kondensator nach einem der Ansprüche 1 bis 8, bei dem der zweite Hohlraum (52) Wände (54) in Form einer Küvette zwischen dem Basisteil (32) und dem Kopfteil (34) umfasst, wobei die erste Betätigungselektrode (46) in dem Kopfteil (34) enthalten ist, und die zweite Betätigungselektrode (56) in den Wänden (54) des zweiten Hohlraums (52) enthalten ist.

11. Kondensator nach einem der Ansprüche 1 bis 10, bei dem das zweite Volumen größer als das erste Volumen ist.

12. Verfahren zur Herstellung eines Kondensats mit variabler Kapazität, umfassend:

- die Herstellung von mindestens zwei Hohlräumen (10, 30), die miteinander durch einen Fluiddurchgang (40) auf einem Träger (60) verbunden sind, umfassend die Anbringung von zwei ersten Elektroden (12, 48), die jeweils einem der beiden Hohlräume zugeordnet sind, und die Anbringung eines Opferharzes (64), um die Hohlräume (10, 30) und den Fluiddurchgang (40) zu bilden,
- die Anbringung einer Membran auf dem Opferharz (64), das einen zweiten Hohlraum (30) bildet,
- die Anbringung einer Kondensatorelektrode (14) auf dem Opferharz des ersten Hohlraums (10) und einer Betätigungselektrode (46) auf der Membran (44) des zweiten Hohlraums (30),
- die Anbringung eines dielektrischen Fluidvolumens (20), das geringer als das Volumen der beiden Hohlräume (10, 30) ist, in den Hohlräumen.

13. Verfahren nach Anspruch 12, bei dem eine Wand jedes Hohlraums (10, 30) und des Fluidkanals (40) parallel zum Träger (60) ist.

14. Verfahren nach Anspruch 13, umfassend das Aufbringen einer Elektrodenschicht auf dem Träger (60), das Gravieren der Elektrodenschicht, um die Wand (12, 48) jedes Hohlraums parallel zum Träger (60) zu bilden.

15. Verfahren nach Anspruch 14, umfassend das Anbringen einer Niveauschicht (62) zwischen den beiden ersten Elektroden (12, 48).

## Claims

1. Variable capacitance ($C_{eq}$) capacitor (1) comprising:

- a first and a second capacitor electrode (12, 14),
- a first cavity (10) having a first volume and containing a dielectric fluid (20) such that a quantity of the dielectric fluid (20) is arranged between the capacitor electrodes (12, 14), and

- **characterized in that** means (30) of varying the quantity of dielectric fluid (20) between the capacitor electrodes (12, 14) comprising at least a second cavity (30) having a second volume and delimited at least by a bottom part (32) and a top part (34), the second cavity (30) being connected to the first cavity (10) by a fluidic passage (40), a flexible leak tight membrane (44) capable of being deformed under the action of a control voltage, and a first and a second actuation electrode (46, 48) capable of modifying the volume of the second cavity (30).

2. Capacitor according to claim 1 in which the dielectric fluid (20) has a dielectric constant greater than that of air.

3. Capacitor according to claim 2 in which the dielectric fluid (20) is an oil.

4. Capacitor according to one of claims 1 to 3 in which the volume of dielectric fluid in the capacitor (1) is less than the sum of the first and second volumes.

5. Capacitor according to claim 4 in which the first cavity (10) has a bottom part and a top part, and in which the heights separating the bottom parts and the top parts of each cavity (10, 30) are equal.

6. Capacitor according to one of claims 1 to 5 in which the first cavity (10) has a bottom part and the bottom parts of each cavity (10, 30) are located on a same bottom plane, the first capacitor electrode (12) being parallel to the bottom plane.

7. Capacitor according to claim 6 in which the fluidic passage (40) is in communication with the first and second cavities (10, 30) by, respectively, a first and a second orifice (22, 42) that are adjacent to the bottom plane.

8. Capacitor according to one of claims 1 to 5 in which the first cavity (10) has a bottom part and the bottom parts of each cavity (10, 30) are not located on a same plane.

9. Capacitor according to one of claims 1 to 8 in which the first actuation electrode (46) is comprised in the top part (34) and the second actuation electrode (48) is comprised in the bottom part (32) of the second cavity (30).

10. Capacitor according to one of claims 1 to 8 in which the second cavity (52) comprises walls (54) in the form of a pan between the bottom part (32) and the top part (34), the first actuation electrode (46) is comprised in the top part (34) and the second actuation electrode (56) is comprised in the walls (54) of the second cavity (52).

11. Capacitor according to one of claims 1 to 10 in which the second volume is greater than the first volume.

12. Method for manufacturing a variable capacitance capacitor comprising:

   - the manufacture of at least two cavities (10, 30) interconnected by a fluidic passage (40) on a support (60), comprising the putting in place of two first electrodes (12, 48) each assigned to one of the two cavities, and the putting in place of a sacrificial resin (64) to form the cavities (10, 30) and the fluidic passage (40),
   - the putting in place of a membrane on the sacrificial resin (64) forming a second cavity (30),
   - the putting in place of a capacitor electrode (14) on the sacrificial resin of the first cavity (10) and an actuation electrode (46) on the membrane (44) of the second cavity (30),
   - the putting in place in the cavities of a volume of dielectric fluid (20) less than the volume of the two cavities (10, 30).

13. Method according to claim 12 in which a wall of each cavity (10, 30) and of the fluidic channel (40) is parallel to the support (60).

14. Method according to claim 13 comprising the deposition of a layer of electrode on the support (60), the etching of the layer of electrode to form the wall (12, 48) of each cavity parallel to the support (60).

15. Method according to claim 14 comprising the putting in place of a levelling layer (62) between the two first electrodes (12, 48).

FIG. 1

FIG. 2

FIG. 3a

FIG. 3b

FIG. 3c

FIG. 4a

64

48

62

12

## FIG. 4b

60

64, 64'

40

66

## FIG. 4c

48    62    12

46          14

64

## FIG. 4d

60    48    62    12

46          14

70

64

68

## FIG. 4e

FIG. 4e'

FIG. 4f

FIG. 4g

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6122972 A

- FR 0350911

**Littérature non-brevet citée dans la description**

- **YOUNG ; BOSER.** A micromachined variable capacitor for monolithic low noise VCOs. *Solid State Sensor and Actuator Workshop,* 1996, 86-89
- **YAO JJ.** High tuning ratio MEMS based tunable capacitors for RF communication applications. *Solid State Sensor and Actuator Workshop,* 1998, 124-127

- **YOON J-B ; NGUYEN CT.** A high-Q tunable micromechanical capacitor with movable dielectric for RF application. *IEDM,* 2000, 489-492